# FASCICULE DE BREVET EUROPEEN

(11) **EP 2 262 725 B1**
(45) Date de publication et mention de la délivrance du brevet: **18.09.2013**
(21) Numéro de dépôt: 09738289.9
(22) Date de dépôt: 24.03.2009
(51) Int. Cl.: C01B 3/32, C01B 3/38, C01B 3/48

(54) **PROCÉDÉ DE DÉMARRAGE D'UNE UNITÉ DE PRODUCTION D'HYDROGÈNE HAUTEMENT INTÉGRÉE THERMIQUEMENT PAR REFORMAGE D'UNE CHARGE HYDROCARBONÉE**
VERFAHREN ZUM STARTEN EINER IN HOHEM MASSE WÄRMEINTEGRIERTEN WASSERSTOFFPRODUKTIONSEINHEIT DURCH NEUFORMIERUNG EINER ZUFUHR AUF KOHLENWASSERSTOFFBASIS
PROCESS FOR STARTING A HYDROGEN PRODUCTION UNIT THAT IS HIGHLY THERMALLY INTEGRATED BY REFORMING A HYDROCARBON-BASED FEED

(30) Priorité: 28.03.2008 US 57897
(43) Date de publication de la demande: 22.12.2010
(73) Titulaire: IFP Energies nouvelles, 92852 Rueil-Malmaison Cedex (FR)
(72) Inventeur: BOYER, Christophe, F-69390 Charly (FR); GIROUDIERE, Fabrice, F-69530 Orlienas (FR); BERTHOLIN, Stephane, F-69110 Ste Foy les Lyon (FR); SATTAR, Aziz, West Chicago Illinois 60175 (US)
(86) Numéro de dépôt international: PCT/FR2009/000322
(87) Numéro de publication internationale: WO 2009/133255

(56) Documents cités:
- EP-A- 1 162 679
- FR-A- 2 867 464
- US-A- 5 938 800
- US-A1- 2004 101 720
- US-B1- 6 348 278

## Description

### DOMAINE DE L'INVENTION

L'invention se situe dans le domaine de la production d'hydrogène par reformage d'une charge hydrocarbonée.

L'hydrogène est utilisé comme matière première dans de nombreuses applications chimiques. C'est un combustible alternatif, qui permet d'alimenter par exemple les piles à combustibles. Celles-ci sont devenues absolument incontournables dans ce domaine car elles apportent une réponse possible à la production d'énergie non polluante.

Différents procédés sont utilisés pour la production d'hydrogène à partir de combustible hydrocarboné :
- l'oxydation partielle (POX pour Partial Oxydation selon la terminologie anglo-saxonne) est une réaction exothermique très souvent catalysée qui produit de l'hydrogène (H₂) par réaction entre la charge et l'oxygène (O₂) contenu par exemple dans l'air : dans le cas du méthane par exemple : CH₄ + ½ O₂ → CO + 2 H₂

Cette réaction est à différencier de l'oxydation totale (TOX pour Total Oxydation) qui ne produit pas d'hydrogène :
dans le cas du méthane par exemple : CH₄ + 2 O₂ → CO2 + 2 H₂O
   - le vaporeformage (SMR pour Steam Reforming selon la terminologie anglo-saxonne) est une réaction endothermique également catalytique qui produit de l'hydrogène par réaction de la charge avec de l'eau (H₂O) :
      dans le cas du méthane par exemple : CH₄ + H2O → CO + 3 H₂
   - le reformage autotherme (ATR pour Autothermal Reforming selon la terminologie anglo-saxonne) est le couplage de la réaction d'oxydation partielle et du vaporeformage.

L'exothermicité de l'oxydation partielle compensant l'endothermicité du vaporeformage, un reformeur autotherme peut être adiabatique, mises à part les pertes thermiques. Ce mode opératoire est donc important pour la gestion de l'énergie.

Le vaporeformage ou le reformage autotherme sont préférés dans le cade de l'invention car ils conduisent à un gaz de synthèse (mélange de monoxyde de carbone (CO), de dioxyde de carbone (CO₂) et d'hydrogène (H₂)) plus riche en hydrogène que l'oxydation partielle.

En sortie d'une unité de reformage, le gaz effluent riche en hydrogène contient beaucoup d'impuretés, en particulier du monoxyde de carbone (CO). Celui-ci est particulièrement gênant car il empoisonne le catalyseur des piles à combustibles. C'est pour cela qu'une section de purification est généralement installée pour extraire de l'hydrogène à la pureté désirée

Dans la suite de la description, le terme purification est employé pour tout moyen permettant d'enrichir en hydrogène un gaz qui en comprend déjà, ou de convertir des impuretés, ou encore d'éliminer des impuretés, telles que par exemple le monoxyde de carbone, éventuellement contenues dans un tel gaz. De tels moyens peuvent par exemple être les moyens P1 à P4 décris ci-après. Ces moyens peuvent être utilisés seuls ou éventuellement en combinaison, notamment lorsque la pureté de l'hydrogène recherchée est très élevée.

P1) Il est connu que le taux de monoxyde de carbone peut être réduit en utilisant la réaction de conversion du monoxyde de carbone (WGS pour Water Gas Shift reaction selon la terminologie anglo-saxonne).

CO + H₂O ⇄ CO₂ + H₂ (WGS)

Dans cette réaction, la vapeur d'eau utilisée peut être celle présente en excès dans l'effluent ou bien de la vapeur d'eau ajoutée au reformat. Elle nécessite l'emploi d'un catalyseur approprié.

En sortie d'un réacteur de conversion du monoxyde de carbone à l'eau, le pourcentage molaire de monoxyde de carbone (CO) est d'environ 0,5 ou supérieur. L'effluent contient aussi de l'eau et du dioxyde de carbone (CO₂). Selon le degré de pureté que l'utilisateur désire obtenir, il peut être souhaitable d'utiliser un moyen supplémentaire de purification.

P2) Une possibilité est d'employer seul ou en combinaison avec par exemple le moyen P1, un système de purification par adsorption (procédé d'adsorption par variation de pression ou PSA pour Pressure Swing Adsorption selon la terminologie anglo-saxonne). Cette technologie permet d'obtenir de l'hydrogène de très haute pureté (supérieure à 99,9 % volumique) à partir d'un reformat après conversion du monoxyde de carbone. Le PSA est fondé sur le principe d'adsorption des impuretés sur des lits de tamis moléculaires. La régénération est obtenue par détente du lit d'adsorption et balayage par un gaz de purge interne. La continuité du système est assurée par l'installation en parallèle de plusieurs ballons.

P3) Une autre possibilité de purification consiste en une réaction d'oxydation préférentielle (PrOx pour Preferential Oxydation selon la terminologie anglo-saxonne).

CO + ½O₂ → CO₂ (PrOX)

Cette réaction est menée dans un réacteur contenant un catalyseur adéquat, à une température qui privilégie l'oxydation du monoxyde de carbone avec l'oxygène de l'air en présence d'hydrogène mais sans consommer ou oxyder des quantités substantielles d'hydrogène, ni conduire à la réaction inverse de la conversion du monoxyde de carbone à l'eau (RWGS pour Reverse Water Gas Shift selon la terminologie anglo-saxonne).

P4) Une purification par membrane est aussi un système utilisé fréquemment pour éliminer les impuretés présentent dans un gaz riche en hydrogène (par exemple supérieure à 99 %vol. voire supérieure à 99,5 %vol.).

Les procédés de production d'hydrogène à grande échelle servent principalement aux industries qui ont besoin d'hydrogène pur pour certaines opérations chimiques, ou à l'approvisionnement de piles à combustibles stationnaires. L'avantage de ces grandes installations est la possibilité de maximiser le rendement en hydrogène en intégrant très fortement et de façon complexe toutes les unités de l'installation. Il est également possible d'utiliser des matériaux de construction coûteux mais résistant aux très hautes températures. Les procédés de production d'hydrogène pur de petite taille sont une réponse au problème du transport et du stockage de l'hydrogène. De petites unités, moins coûteuses et plus mobiles, permettent d'avoir une source d'hydrogène à proximité de l'installation qui en a besoin.

Un combustible sous forme liquide, comme par exemple l'éthanol, est plus facile à manipuler pour un utilisateur qu'une charge gazeuse. Cependant, l'utilisation d'une charge liquide pose le problème supplémentaire de la vaporisation de cette charge. En effet, avant d'entrer dans le reformeur autotherme, la charge doit être sous forme de vapeur et mélangée à la vapeur d'eau et à l'air. Le procédé doit donc, d'une part vaporiser la charge liquide, et d'autre part de produire la vapeur d'eau nécessaire à la réaction. Il est difficile dans ces conditions de concevoir un procédé totalement autotherme sans pour autant diminuer le rendement en hydrogène pur de l'installation.

La demande en hydrogène, surtout pour les unités de petite taille, peut être fluctuante. De ce fait, il est mieux que le générateur puisse être arrêté et redémarré fréquemment. Une difficulté supplémentaire est donc la réalisation d'une procédure de démarrage rapide et performante, tout en restant économique.

### ART ANTERIEUR

Le problème du démarrage rapide d'une installation de production d'hydrogène a déjà été étudié dans l'art antérieur. Globalement, deux principes ont été mis en avant : soit c'est la charge elle-même qui est chauffée de façon directe ou indirecte avant de pénétrer dans le reformeur, soit c'est le réacteur et son lit catalytique qui est chauffé préalablement à l'introduction de la charge à reformer.

Selon la première solution, le brevet US 4788004 propose d'utiliser un brûleur pour la phase de démarrage d'un procédé de reformage. Celui-ci, brûlant un combustible adéquat, produit assez de chaleur pour chauffer, directement ou indirectement, les réactifs de la réaction de reformage jusqu'à leur température d'auto-allumage.

La demande de brevet US 2003/0154654 propose de faciliter le démarrage rapide de petites unités de production d'hydrogène couplées à une pile à combustible en évaporant l'eau directement dans un brûleur et non pas par échange de chaleur indirect avec un effluent chaud.

Selon la seconde solution, la demande de brevet US 2003/0019156 propose, pour accélérer le démarrage des unités de reformage de charges hydrocarbonées, de préchauffer le réacteur de reformage grâce à de l'air à une température suffisant à ce que le catalyseur de reformage s'oxyde. De cette manière, le catalyseur génère sa propre chaleur, qui additionnée à la chaleur de l'air, accélère le préchauffage du réacteur.

La demande de brevet WO 2005/090230 dévoile une procédure de démarrage d'une unité de production d'hydrogène débutant par le chauffage du réacteur de reformage ainsi que d'une autre unité en aval grâce à un gaz riche en oxygène chaud. Cette méthode est destinée au reformage des charges hydrocarbonées typiquement gazeuses dans les conditions du reformage.

La méthode pour conduire un système de reformage découverte dans le brevet US 6521204 contient un procédé de démarrage rapide consistant en l'utilisation d'un mélange de charge hydrocarbonée et d'air pauvre en charge hydrocarbonée. Ce mélange réagit sur le catalyseur du réacteur de reformage en produisant de la chaleur tout en minimisant la formation de carbone.

Pour chauffer rapidement le réacteur de reformage ainsi que les autres unités du procédé de production de gaz réformé, les inventeurs de la demande de brevet allemand DE 10 2004 001 310 A1 réalisent dans un premier temps une oxydation totale sur le catalyseur de reformage de la charge hydrocarbonée gazeuse mélangée aux fumées sortant d'un brûleur.

L'intégration thermique est améliorée lorsque les deux solutions sont combinées. Ainsi, la demande de brevet US 2003/0093950 décrit un système intégré de production d'énergie par reformage d'un carburant et utilisation d'une pile à combustible thermiquement intégré. Pour que le système atteigne au démarrage rapidement la température nécessaire à son fonctionnement, tout en minimisant sa consommation d'énergie électrique, deux brûleurs fonctionnent en même temps, l'un pour chauffer le réacteur de reformage, l'autre pour évaporer l'eau et chauffer les autres unités en aval du reformeur.

Le brevet US 6635372 se penche quant à lui sur l'utilisation plus particulièrement de charges hydrocarbonées liquides. Pour la phase de démarrage, le procédé utilise une fraction gazeuse, qui a été évaporée lors d'un usage précédent et qui a été stockée sous forme adsorbée. Lors du démarrage, ces vapeurs sont désorbées et sont brûlées avec de l'air. Les effluents chauds sont destinés à réchauffer rapidement le réacteur de reformage.

Le brevet US 2004/101 720 A1 décrit un procédé de reformage de gaz naturel comportant une unité de séparation de l'hydrogène par membrane avec un critère de température pour le démarrage qui dépend d'une valeur fixée au niveau du séparateur par membrane.

### DESCRIPTION SOMMAIRE DE L'INVENTION

L'invention concerne un procédé de démarrage d'une unité de production d'hydrogène intégré thermiquement selon la revendication 1.

### DESCRIPTION SOMMAIRE DES FIGURES

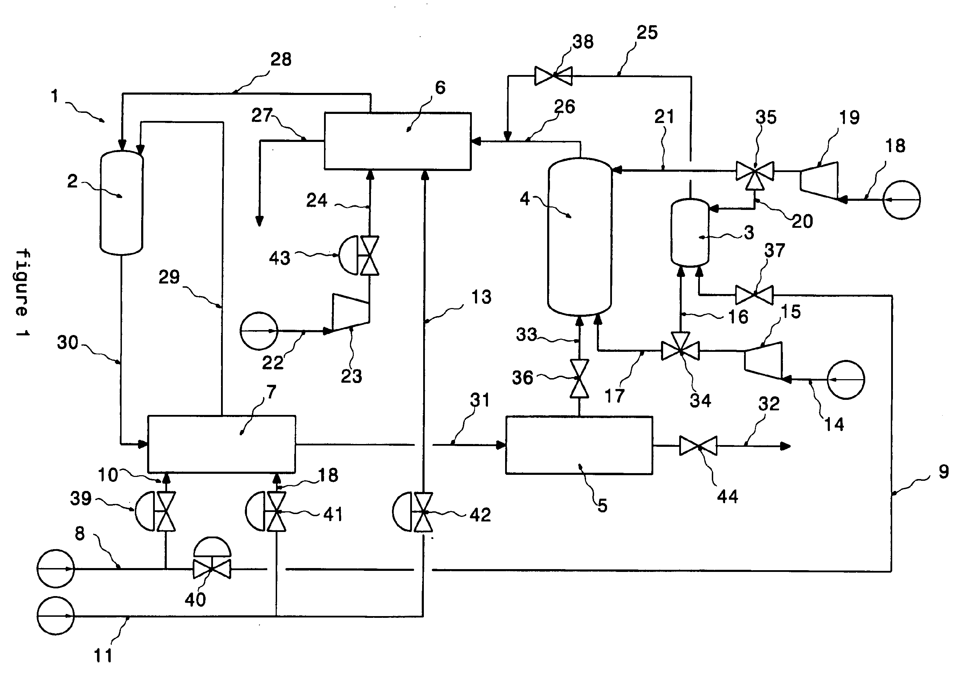

La figure 1 est un schéma de procédé représentant une variante d'installation de reformage d'une charge hydrocarbonée dont le démarrage est effectué selon l'invention.

### DESCRIPTION DÉTAILLÉE DE L'INVENTION

A. Description du procédé de production d'hydrogène :

L'invention est adaptée au reformage de charges hydrocarbonées. Il peut s'agir d'hydrocarbures, de coupes pétrolières ou d'alcools, comme par exemple l'éthanol, ou enfin des mélanges de ceux-ci. La charge hydrocarbonée à reformer est liquide.

Un carburant potentiellement intéressant est le bioéthanol. Ce biocarburant est présenté comme une alternative énergétique durable. Il est obtenu par fermentation ou distillation des matières premières végétales telles que, par exemple, le saccharose ou l'amidon. Il a l'avantage de présenter un taux d'émission de gaz à effet de serre très bas.

Certaines charges peuvent contenir des composés soufrés ou des composés odorants ajoutés par obligation légale. Par exemple, la dénaturation de l'éthanol par ajout de méthanol ou d'essence permet de le rendre impropre à la consommation et ainsi d'éviter tout trafic douanier, les taxes pour l'alcool destiné à la consommation humaine et à l'industrie chimique n'étant pas les mêmes. Cependant, ces composés chimiques peuvent détériorer les catalyseurs présents dans l'installation. Il est donc d'usage pour l'homme du métier de purifier la charge avant son utilisation, en utilisant par exemple une unité de désulfuration.

En plus de la charge hydrocarbonée, le procédé requiert un apport d'eau. Celle-ci est de préférence désionisée. Dans le cas où la réaction de reformage est un reformage autotherme, une source d'oxygène est nécessaire à la réaction. Celle-ci peut être de l'oxygène pur, de l'air ou de l'air enrichi en oxygène.

Le procédé de reformage est mis en oeuvre par l'homme du métier parmi les procédés connus. De façon préférée, l'invention utilise un réacteur de reformage autotherme (ATR). Celui-ci fonctionne typiquement à une température comprise entre 400 °C et 1000 °C. La pression est comprise traditionnellement entre 100 et 4000 kPa. Le réacteur d'ATR contient un ou plusieurs catalyseurs convenablement choisis par l'homme du métier. L'invention peut toutefois très bien être appliquée à un réacteur de vaporeformage, dans lequel a lieu une reaction endothermique. Dans la suite de ce texte, le terme de reformage désigne soit un reformage autotherme, soit un vaporeformage (aussi appelé reformage à la vapeur), soit un autre type de reformage connu de l'homme du métier.

Les charges introduites dans le réacteur de reformage peuvent être au préalable chauffées. Lorsque la charge hydrocarbonée est liquide, celle-ci peut être évaporée seule ou avec de l'eau et/ou avec de la vapeur d'eau avant d'être injectée dans le réacteur de reformage sous forme gazeuse. Il est généralement important de ne pas avoir à l'entrée du reformeur un mélange diphasique car ceci réduit les performances du réacteur. L'eau peut également être vaporisée seule ou avec de l'air et/ou avec la charge hydrocarbonée. A l'entrée du reformeur, il est généralement important que la température du mélange reste inférieure à la température d'auto-allumage de la charge dans les conditions opératoires.

L'énergie nécessaire à ces vaporisations et chauffages est prise à différents endroits du procédé, par des échangeurs de chaleurs bien positionnés et dimensionnés convenablement par l'homme du métier. Les sources de chaleur principales sont l'effluent chaud sortant du reformeur et les gaz de combustions provenant du brûleur de démarrage ou du brûleur de gaz résiduels. De façon préférée, pour maximiser la production de vapeur d'eau, la charge hydrocarbonée liquide est vaporisée avec une quantité d'eau aussi importante que possible en utilisant la chaleur de l'effluent du reformeur. Certains autres effluents, comme celui du réacteur de conversion du monoxyde de carbone (WGS) s'il est présent, peuvent être mis à profit. Globalement, une bonne intégration thermique permet d'atteindre un rapport molaire H₂O/C assez élevé (préférentiellement supérieur à 2,7, plus préférentiellement supérieur à 3,0, encore plus préférentiellement supérieur à 4,0) ce qui permet d'atteindre un bon rendement en hydrogène (préférentiellement supérieur à 55 %, plus préférentiellement supérieur à 60 %, encore plus préférentiellement supérieur à 64 %) tout en maintenant le procédé autotherme, c'est à dire sans apport d'énergie extérieure.

Le reformat, c'est-à-dire le flux issu du réacteur de reformage, est un gaz de synthèse. Il est préférentiellement traité par une section permettant d'augmenter la teneur en hydrogène du gaz qui en contient ou de réduire la teneur en monoxyde de carbone dans ledit gaz, ou les deux à la fois.

Cette section de purification peut contenir une ou plusieurs unités de conversion ou de séparation, telle que par exemple celles décrites dans la partie concernant le domaine de l'invention de cette description.

Typiquement, un réacteur de conversion du monoxyde de carbone à l'eau (WGS) est le moyen le plus utilisé. Plusieurs zones catalytiques de conversion peuvent être employées pour réduire le taux de monoxyde de carbone dans le reformat. La réaction étant exothermique, l'effluent du réacteur de conversion du monoxyde de carbone à l'eau est généralement refroidi par un ou plusieurs échangeurs, puis l'eau restante peut être éliminée dans un condenseur. Il est possible d'utiliser tout autre forme de purification, comme par exemple une oxydation préférentielle (PrOx). Dans une réalisation préférée de ce procédé, la section de purification comprend un système de PSA ou un système de filtration par membrane. Les gaz impropres rejetés par cette section de purification, nommés gaz de purge ou "off-gas" selon la terminologie anglo-saxonne, sont brûlés dans un brûleur à gaz.

Ce brûleur à gaz (nommé "Off-Gas Brumer" selon la terminologie anglo-saxonne) est alimenté en air par une soufflante. Si l'installation de production d'hydrogène est couplée à une pile à combustible, les gaz anodiques sortant pourront aussi être utilisés comme gaz résiduels et brûlés dans le brûleur de gaz résiduels.

Selon un mode préféré de réalisation, la température des effluents du brûleur (gaz de carneau), nommés "flue gas" selon la terminologie anglo-saxonne, est contrôlée et réglée grâce à une injection d'air froid au sein ou en sortie du brûleur. Les effluents chauds du brûleur servent par la suite à chauffer et/ou à vaporiser indirectement la charge hydrocarbonée, l'eau et/ou l'air par l'intermédiaire d'échangeurs de chaleur.

### B. Description de la procédure de démarrage :

La procédure de démarrage comporte principalement quatre étapes. La première étape (étape a) consiste à mettre en route un brûleur dédié au démarrage, nommé "Start-Up Bumer" selon la terminologie anglo-saxonne, qui permet le chauffage indirect d'un flux d'air pénétrant dans le réacteur de reformage et servant à le préchauffer. La seconde étape (étape b) consiste à vaporiser de l'eau par contact avec les flux chauds du procédé. La vapeur d'eau ainsi formée est introduite dans le réacteur de reformage, ce qui permet de le préchauffer. La troisième étape (étape c) consiste à démarrer le réacteur de reformage, alimenté en charge hydrocarbonée chauffée, en vapeur d'eau et de façon préférée en air pour obtenir un fonctionnement autotherme. Enfin, la dernière étape (étape d) consiste à basculer l'alimentation en combustible et oxydant d'un brûleur vers l'autre : le brûleur de démarrage est arrêté et le brûleur de gaz résiduels est démarré. Il est possible d'utiliser le même combustible ou des combustibles distincts pour alimenter ces deux brûleurs.

Préalablement au démarrage de l'unité de production d'hydrogène, il est nécessaire d'allumer et de mettre en état opérationnel les appareils servant à l'approvisionnement en réactifs. Les compresseurs à air sont démarrés. Dans le cas où, par exemple, la charge nécessite une désulfuration, l'unité de désulfuration doit être chauffée, par exemple par un système électrique. De même, dans le cas où l'eau utilisée est déminéralisée, le générateur d'eau déminéralisée est démarrés préalablement au démarrage de toute l'unité.

Le démarrage dépend de l'état dans lequel se trouve initialement l'unité. Ainsi, lorsque par exemple le système contient encore du combustible qui n'a pas été retiré depuis la dernière utilisation, une combustion non contrôlée peut se produire lors de l'ajout de gaz riche en oxygène. Pour éviter de tels phénomènes, il est préféré d'effectuer une purge du système avant le démarrage. Dans ce cas, le réacteur de reformage, les unités de séparation et de purification ainsi que les brûleurs sont purgés avec un gaz inerte, par exemple de l'azote, et en ce qui concerne les brûleurs, ils peuvent être purgés avec de l'air, ce qui est moins coûteux.

La sortie de la section de purification est connectée sur un évent.

Le réacteur de reformage est préférentiellement mis sous pression de gaz inerte, par exemple d'azote, à une pression comprise entre 30 % et 60 % (préférentiellement entre 40 % et 50 %) de la pression de travail de l'installation en régime permanent qui est comprise traditionnellement entre 100 et 4000 kPa.

A l'étape a, un flux de gaz contenant de l'oxygène, qui est préférentiellement de l'air, mais qui peut aussi être de l'oxygène pur ou de l'air enrichi en oxygène, est envoyé dans le brûleur de démarrage. La charge hydrocarbonée est ajoutée. Lorsque celle-ci est liquide, le brûleur de démarrage présente une technologie adéquate pour la combustion d'une charge liquide. Il est alors par exemple équipé d'un système de pulvérisation. Pour initier la combustion, on utilise par exemple une électrode mise sous tension. Selon un mode de réalisation préféré, un flux d'air est envoyé en sortie du brûleur ou au sein de l'enveloppe du brûleur pour contrôler la température des effluents du brûleur, de manière à diluer les gaz trop chauds qui peuvent endommager le matériel des conduites situées à l'aval du brûleur. Par l'intermédiaire d'échangeurs de chaleur, les gaz effluents du brûleur de démarrage chauffent un flux de gaz inerte ou riche en oxygène, préférentiellement de l'air, qui peut être le même que celui utilisé pour le reformage ou non. Ce gaz est envoyé dans le reformeur et la section de purification de préférence avec un débit d'une valeur de 50 % à 80 % (plus préférentiellement de 60 % à 70 %) de la valeur du débit de l'installation en régime permanent. Ce système est de préférence maintenu jusqu'à ce que la température de l'effluent de brûleur de démarrage soit généralement supérieure à 600 °C, préférentiellement comprise entre 625 °C et 800 °C, et que la température du gaz sortant du reformeur soit généralement supérieure à 200 °C, préférentiellement supérieure à 250 °C, de manière encore plus préférée comprise entre 300 °C et 500 °C.

Lorsque ces conditions sont satisfaites, les gaz chauds du procédé sont mis à profit à l'étape b pour vaporiser, voire surchauffer, l'eau destinée à la réaction de reformage. Pour cela, avant d'entrer dans le réacteur de reformage, le flux d'eau circule dans un ou plusieurs échangeurs de chaleur en contact avec au moins un flux chaud du procédé, qui est choisi parmi les flux suivants : le courant chaud de sortie du brûleur, le courant chaud de sortie du reformeur, le courant de sortie de toute autre unité dont l'effluent est chaud, comme par exemple un réacteur de conversion du monoxyde de carbone. Cette circulation d'eau est maintenue jusqu'à ce que la température à la sortie de tous les échangeurs soit suffisante pour être sûr que l'eau est totalement vaporisée. Par exemple, cette condition est remplie si la température à la sortie de tous les échangeurs est supérieure à 150 °C (de préférence comprise entre 180 °C et 250 °C) lorsque la pression opératoire est de 500 kPa, supérieure à 180 °C (de préférence comprise entre 200°C et 280°C) lorsque la pression opératoire est de 1000 kPa, supérieure à 250 °C (de préférence comprise entre 280 °C et 300 °C) lorsque la pression opératoire est de 4000 kPa. De façon préférée, le réacteur de reformage est préchauffé par le gaz inerte ou riche en oxygène et le flux d'eau vaporisée. Le débit de ce flux d'eau est augmenté jusqu'à sa valeur en régime permanent, puis cette circulation d'eau est maintenue jusqu'à ce que la température à le sortie de tous les échangeurs soit supérieure à 150 °C (de préférence comprise entre 180 °C et 250 °C) si la pression opératoire est de 500 kPa, supérieure à 180 °C (de préférence comprise entre 200 °C et 280 °C) si la pression opératoire est de 1000 kPa, supérieure à 250 °C (de préférence comprise entre 280 °C et 300 °C) si la pression opératoire est de 4000 kPa, pour s'assurer que l'eau est totalement vaporisée. D'autre part, la température du flux issu du réacteur de reformage doit atteindre au moins 300 °C, de façon plus préférée être supérieure à 350 °C, de façon encore plus préférée être comprise entre 375 °C et 800 °C.

Lorsque ces conditions sont remplies, le réacteur de reformage est démarré. Cependant, si le gaz utilisé pour la préchauffe est riche en oxygène, il est très préférable d'effectuer une étape de purge du réacteur à ce moment. Cela permet d'éviter la cokéfaction de la charge hydrocarbonée sur le catalyseur chaud. Le flux d'air ou de gaz riche en oxygène circulant dans le reformeur est arrêté et un gaz inerte, par exemple de l'azote, est envoyé. La purge peut aussi être réalisée au moyen d'un flux de vapeur d'eau sans oxygène à basse température (par exemple de 10 °C à 200 °C). Dans tous les cas, la purge ne doit pas être trop longue et/ou le gaz utilisé pour cette purge trop froid pour éviter le refroidissement du catalyseur.

Une fois la purge effectuée, le reformage est réalisé à l'étape c en injectant la charge hydrocarbonée dans le réacteur de reformage. Le flux est réglé de manière à ce que le débit soit de préférence compris entre 15 % et 50 % (de préférence entre 20 % et 30 %) du débit imposé en régime permanent. La charge hydrocarbonée est auparavant chauffée lorsqu'il s'agit d'une charge gazeuse, ou vaporisée et préférablement surchauffée lorsqu'il s'agit d'une charge liquide, par échange thermique indirect avec au moins un flux chaud du procédé, qui est choisi parmi les flux suivants : le courant chaud de sortie du brûleur, le courant chaud de sortie du reformeur, le courant de sortie de toute autre unité dont l'effluent est chaud, comme par exemple un réacteur de conversion du monoxyde de carbone. C'est préférentiellement le courant chaud de sortie du reformeur qui est utilisé. La charge hydrocarbonée peut également être mélangée à de la vapeur d'eau ou de l'eau liquide. Toutefois, il est préférable que la température du mélange réactionnel ne dépasse pas sa température d'auto-allumage avant d'entrer dans le reformeur. Selon un mode de fonctionnement préféré, le flux d'air ou de gaz riche en oxygène précédemment arrêté pour la purge est réinjecté en mélange à la vapeur d'eau et de charge hydrocarbonée de manière à ce que le reformage soit autotherme. Cette circulation des flux est maintenue jusqu'à ce que la température en sortie du reformeur soit de préférence supérieure à 300 °C, de façon plus préférée supérieure à 350 °C, de façon encore plus préférée comprise entre 375 °C et 800 °C. Lorsque les conditions opératoires sont stabilisées, celles-ci sont de préférence maintenues entre 5 et 15 minutes.

Le fonctionnement en régime permanent du générateur est obtenu lorsque l'apport de chaleur nécessaire au fonctionnement préférentiellement autotherme du reformeur n'est plus dû à la combustion de la charge hydrocarbonée mais de celle des gaz résiduels pauvre en hydrogène obtenus lors des opérations de la section de purification du gaz réformé. Ce recyclage permet d'économiser de la matière première, donc d'obtenir de meilleurs rendements énergétiques sur le procédé de reformage de la charge hydrocarbonée en hydrogène, tout en restant performant. Le brûleur de gaz résiduels possède la technologie adéquate pour la combustion de gaz, de préférence un brûleur catalytique pour limiter les émissions de composés polluants tels que les oxydes d'azote.

Selon l'invention, à l'étape c, un flux de charge hydrocarbonée est envoyé vers un échangeur de chaleur, où ladite charge est vaporisée par échange thermique indirect avec au moins un flux chaud du procédé, puis ladite charge entre dans le réacteur de reformage. Le flux de charge hydrocarbonée est préférentiellement réglé de manière à ce que le débit soit compris entre 15 % et 50 % du débit imposé en régime permanent, cette circulation des flux est maintenue jusqu'à ce que la température en sortie du reformeur soit préférentiellement supérieure à 300°C.

Le transfert de la combustion du brûleur de démarrage au brûleur de gaz résiduels s'effectue dans la quatrième étape (étape d). Une solution consiste à arrêter le brûleur de démarrage, à transférer les flux d'air ou de gaz riche en oxygène servant à la combustion et à la dilution des effluents chauds vers le brûleur de gaz résiduels, d'armer les électrodes d'allumage du brûleur de gaz résiduels et enfin de faire pénétrer les effluents de la section de purification dans le brûleur de gaz résiduels. De préférence, il y a moins de 30 secondes, voire de façon plus préférée entre 2 secondes et 10 secondes d'attente entre l'arrêt du brûleur de démarrage et le démarrage du brûleur de gaz résiduels afin d'éviter le refroidissement de l'ensemble de l'unité de production d'hydrogène. Cependant, cette période de temps d'attente peut être mise à profit pour réaliser un balayage d'air ou d'un gaz inerte tel que par exemple de l'azote dans le brûleur de démarrage, ce qui permet d'éviter une corrosion due à l'eau acide issue de la combustion.

Une autre solution consiste à allumer d'abord le brûleur de gaz résiduels en l'approvisionnant avec un flux d'air ou de gaz riche en oxygène, en armant les électrodes d'allumage et faisant pénétrer les gaz sortant de la section de purification. Le brûleur de démarrage est ensuite rapidement éteint et la purge du brûleur de démarrage peut être alors effectuée.

Selon cette variante il est préférable d'utiliser des flux gazeux riches en oxygène indépendants. Après le démarrage du brûleur de gaz résiduel, les débits d'eau et de charge hydrocarbonée peuvent être augmentés progressivement jusqu'au débit fixé en régime permanent.

La section de purification permet de préférence de séparer les gaz résiduels envoyés au brûleur de gaz résiduels du gaz riche en hydrogène. Avant le démarrage du brûleur de gaz résiduels, la section de purification est branchée sur un évent. Après le démarrage du brûleur de gaz résiduels, et dès que le brûleur de démarrage est arrêté, la totalité du gaz de synthèse produit est envoyée dans le brûleur de gaz résiduels. Selon ce mode de réalisation de l'invention, lorsque l'unité de purification est démarrée, le gaz de synthèse est purifié, le gaz riche en hydrogène produit est soutiré et c'est le gaz de purge qui alimente le brûleur de gaz résiduels. Selon le niveau de pureté recherché, la section de purification comporte une ou plusieurs unités d'une technologie connue de l'homme du métier. Ces unités sont démarrées avant ou après l'étape d selon leur technologie. Par exemple, certaines sont chauffées, d'autres purgées, par exemple par un gaz inerte. Le procédé de démarrage selon l'invention permet de produire rapidement un flux d'hydrogène en sortie de la section de purification dont la spécification est conforme au souhait de l'utilisateur.

### VARIANTE PRÉFÉRÉE DE REALISATION DE L'INVENTION

Selon les références de la figure 1, l'unité de production d'hydrogène 1 comprend, selon cet exemple, un réacteur de reformage 2, un brûleur dédié au démarrage 3, un brûleur servant en régime permanent 4, une section de purification 5 et deux systèmes d'échanges thermiques 6 et 7.

Avant le démarrage, l'unité 1 est mise sous tension électrique. Les systèmes de désulfuration de la charge hydrocarbonée et de déminéralisation de l'eau, non représentés ici, sont prêts. Les compresseurs d'air 15, 19 et 23 sont allumés.

De façon préférée, une purge du système est effectuée. Pour cela, un flux d'air ou de gaz inerte, par exemple de l'azote, est chargé par la ligne 14, pénètre dans le brûleur de gaz résiduels 4 via la ligne 17 et dans le brûleur de démarrage 3 via la ligne 16, puis dans l'échangeur de chaleur 6 via la line 25 ou la ligne 26, et s'échappe à l'évent via la ligne 27. Un flux de gaz inerte, de préférence de l'azote, est chargé par la ligne 22, traverse l'échangeur de chaleur 6, entre dans le réacteur de reformage 2 par la ligne 28. Le débit est maintenu de manière à ce que la pression à l'intérieur du reformeur 2 atteigne environ 40 % de la pression de travail de l'installation en régime permanent. La vanne 36 est fermée et la vanne 44 est ouverte de manière à ce que les effluents de la section de purification 5 s'échappent par la conduite 32 à l'évent.

Lors de l'étape a du procédé de démarrage, un flux d'air est injecté dans le brûleur de démarrage 3 via l'entrée 14, le compresseur 15 et la ligne 16. Un second flux d'air, qui sert à diluer les effluents chauds du brûleur, est envoyé en sortie du brûleur de démarrage 3 via l'entrée 18, le compresseur 19 et la ligne 20. Un troisième flux d'air est envoyé dans l'échangeur 6 via l'entrée 22, le compresseur 23 et la ligne 24. Le débit de ce troisième flux d'air présente une valeur de 50 % à 80 % (plus préférentiellement de 60 % à 70 %) de la valeur du débit de l'installation en régime permanent lorsque le procédé chimique choisi est un reformage autotherme. La charge hydrocarbonée est injectée dans le brûleur de démarrage 3 via l'entrée 8 et la ligne 9 et une étincelle enflamme le combustible. Les effluents chauds issus de cette combustion sortent par la ligne 25 et réchauffent l'air arrivant par la ligne 24 dans l'échangeur de chaleur 6. Ledit air maintenant chaud entre dans le réacteur de reformage 2 via la ligne 28 et en sort par la ligne 30. Il pénètre ensuite dans le système d'échange thermique 7 puis dans la section de purification 5 via la ligne 31, et sort à l'évent par la ligne 32. Ces conditions opératoires sont maintenues jusqu'à ce que la température du flux d'air dans la ligne 30 soit supérieure à 200 °C.

Lors de l'étape b du procédé de démarrage, un flux d'eau entrant par la ligne 11 est injecté dans l'échangeur 6 via la ligne 13 et dans l'échangeur 7 via la ligne 12. L'eau peut aussi selon d'autres modes de réalisation être injectée dans d'autres échangeurs de chaleur à différents endroits du procédé. La vapeur d'eau produite rejoint le réacteur de reformage 2 par les lignes 28 et 29. Le flux d'eau pénétrant au total dans le reformeur 2 est réglé de manière à ce que le débit soit compris entre 15 % et 50 % (de préférence entre 20 % et 30 %) du débit imposé en régime permanent. Cette circulation d'eau est maintenue jusqu'à ce que l'eau soit totalement vaporisée à la sortie des échangeurs 6 et 7. Son débit est alors augmenté jusqu'à sa valeur en régime permanent et la circulation d'eau est maintenue à nouveau jusqu'à ce que l'eau soit totalement vaporisée à la sortie des échangeurs 6 et 7, et d'autre part jusqu'à ce que la température du flux d'air dans la ligne 30 soit supérieure à 300 °C.

A la fin de l'étape b et avant l'étape c, un inertage du réacteur de reformage peut être réalisé. Pour cela, le flux d'air entrant par la ligne 22 et arrivant ligne 24 est remplacé par un flux de gaz inerte dans ces conditions, qui peut être de l'azote ou de la vapeur d'eau sans oxygène moléculaire à basse température (10 °C à 200 °C par exemple).

Dans l'étape c du procédé de démarrage, un flux de charge hydrocarbonée entrant en 8 est envoyé dans la ligne 10. La charge se vaporise lorsqu'elle est liquide ou se réchauffe lorsqu'elle est gazeuse en passant par l'échangeur de chaleur 7, puis entre dans le réacteur de reformage 2 via la ligne 29. Le flux de charge hydrocarbonée est réglé de manière à ce que le débit soit compris entre 15 % et 50 % (de préférence entre 20 % et 30 %) du débit imposé en régime permanent. Cette circulation des flux est maintenue jusqu'à ce que la température en sortie du reformeur soit supérieure à 300°C, de façon plus préférée supérieure à 350°C, de façon encore plus préférée comprise entre 375°C et 800°C. Au cours de cette étape, le gaz contenant de l'hydrogène produit par le reformeur est préférentiellement envoyé dans une torchère (non représentée) pour être brûlé.

Lors de l'étape d du procédé de démarrage, les électrodes d'allumage du brûleur de gaz résiduels 4 sont mises sous tension électrique. Le brûleur de démarrage 3 est arrêté, les vannes 34 et 35 sont dirigées de manière à ce que les flux d'air provenant des compresseurs 15 et 19 soient dirigés vers de brûleur de gaz résiduels, la vanne 36 est ouverte permettant aux effluents de la section de purification 5 de parvenir au brûleur de gaz résiduels via la ligne 33. La combustion commence aussitôt. Le débit de charge hydrocarbonée est alors progressivement augmenté pour atteindre la valeur du débit imposé en régime permanent. Lorsque le débit permanent est atteint et que la composition du gaz de synthèse est stabilisée, la section de purification 5 est mise en route. La vanne 44 est ouverte pour laisser sortir le gaz riche en hydrogène produit via la ligne 32 ; les gaz de purge de la section de purification 5 sont injectés dans le brûleur 4 via la ligne 33.

## Revendications

1. Procédé de démarrage d'une unité de production d'hydrogène par vaporeformage ou procédé autotherme d'une charge hydrocarbonée liquide, intégré thermiquement, ladite unité comprenant les éléments suivants :
un brûleur de démarrage (3), un brûleur servant en régime permanent (4), un réacteur de vaporeformage (2), une section de purification (5) et deux échangeurs (6) et (7) et le procédé de démarrage faisant appel aux étapes suivantes:
- une étape a dans laquelle le brûleur de démarrage (3) dédié au démarrage de l'unité est approvisionné en un mélange de charge hydrocarbonée et d'air, ledit mélange étant brûlé et les effluents chauds issus dudit brûleur réchauffant un flux gazeux d'air au moyen de l'échangeur (6) qui entre dans le réacteur de reformage (2), en ressort puis entre dans l'échangeur (7), puis dans la section de purification (5), jusqu'à ce que la température du flux d'air issu dudit réacteur de reformage atteigne une valeur supérieure à 200 °C ,
- une étape b, initiée après l'étape a, dans laquelle un flux d'eau est évaporé par échange thermique indirect dans l'échangeur (6), puis l'échangeur (7) avec au moins un des flux chauds du procédé, générant un flux de vapeur d'eau qui entre dans le réacteur de reformage, jusqu'à ce que le flux issu de ce réacteur atteigne une température supérieure à 300 °C et que la totalité de l'eau soit vaporisée, le flux d'eau étant réglé de manière à ce que le débit soit compris entre 15% et 50% du débit imposé en régime permanent,
- une étape c, initiée après l'étape b, dans laquelle la charge hydrocarbonée à reformer (10) est évaporée par échange thermique indirect avec au moins un des flux chauds du procédé dans l'échangeur (7), ladite charge est ensuite introduite dans le réacteur de reformage (2), ce qui permet la production d'un courant effluent riche en hydrogène (30), étape qui est maintenue jusqu'à atteindre une température de l'effluent (30) comprise entre 375°C et 800°C, ledit flux de charge hydrocarbonée (10) étant réglé de manière à ce que le débit soit compris entre 20 % et 30 % du débit imposé en régime permanent, et ces conditions opératoires étant maintenues entre 5 et 15 minutes,
- une étape d, initiée après l'étape c, dans laquelle le brûleur de démarrage (3) est arrêté et, à sa place, un brûleur (4) servant en régime permanent est allumé, ledit brûleur (4) étant alimenté par un mélange d'air et de gaz résiduels rejetés par la section de purification (5) du courant riche en hydrogène,
procédé de démarrage dans lequel il y a moins de 30 secondes d'attente entre l'arrêt du brûleur de démarrage (3) et le démarrage du brûleur servant en régime permanent (4) afin d'éviter le refroidissement de l'ensemble de l'unité de production d'hydrogène, et pendant ce temps d'attente un balayage d'air ou d'un gaz inerte est réalisé dans le brûleur de démarrage (3),
procédé de démarrage dans lequel un flux d'air (20) est envoyé en sortie du brûleur de démarrage (3) et du brûleur servant en régime permanent (4) pour contrôler la température des effluents de ces brûleurs.

2. Procédé de démarrage selon la revendication 1, dans lequel un inertage du réacteur de reformage (2) est effectué entre l'étape b et l'étape c grâce à une purge dudit réacteur de reformage avec un gaz inerte.

3. Procédé de démarrage selon l'une des revendications 1 ou 2, dans lequel au moins un composant de l'unité de production d'hydrogène sélectionnés parmi le réacteur de reformage (2), le brûleur de démarrage (3), le brûleur servant en régime permanent (4), la section de purification (5), est purgé avant la procédure de démarrage.

4. Procédé de démarrage selon l'une des revendications 1 à 3, dans lequel la charge hydrocarbonée (8) est vaporisée par échange thermique indirect dans l'échangeur (7) avec le courant chaud de sortie (30) du reformeur de reformage (2) avant d'entrer dans ledit réacteur.

5. Procédé de démarrage selon l'une quelconque des revendication 1 à 4, dans lequel un balayage d'air est réalisé dans le brûleur de démarrage (3) pendant la période de temps d'attente située entre l'arrêt du brûleur de démarrage (3) et l'allumage du brûleur servant en régime permanent (4) à l'étape d.

6. Procédé de démarrage selon l'une des revendications 1 à 5, dans lequel le transfert de la combustion du brûleur de démarrage (3) au brûleur servant en régime permanent (4) s'effectue dans la quatrième étape (étape d) selon une première variante consistant à arrêter le brûleur de démarrage, à transférer les flux d'air ou de gaz riche en oxygène servant à la combustion et à la dilution des effluents chauds vers le brûleur de gaz résiduels, puis à armer les électrodes d'allumage du brûleur servant en régime permanent (4) et enfin à faire pénétrer les effluents (33) de la section de purification (5) dans le brûleur de gaz résiduels (4).

7. Procédé de démarrage selon l'une des revendications 1 à 5, dans lequel le transfert de la combustion du brûleur de démarrage (3) au brûleur servant en régime permanent (4) s'effectue dans la quatrième étape (étape d) selon une seconde variante consistant à allumer d'abord le brûleur servant en régime permanent (4) en l'approvisionnant avec un flux d'air ou de gaz riche en oxygène, en armant les électrodes d'allumage et en faisant pénétrer les gaz sortant de la section de purification (5), puis a éteindre rapidement le brûleur de démarrage (3) et à effectuer la purge dudit brûleur de démarrage (3).

## Patentansprüche

1. Verfahren zum Starten einer Einheit zur thermisch integrierten Wasserstoffproduktion durch Dampfreformierung oder ein autothermes Verfahren einer flüssigen Kohlenwasserstoffbeschickung, wobei die Einheit die folgenden Elemente umfasst:
einen Startbrenner (3), einen Brenner, der in Dauerbetrieb läuft (4), einen Dampfreformierungsreaktor (2), einen Reinigungsabschnitt (5) und zwei Überträger (6) und (7) und wobei bei dem Startverfahren die folgenden Schritte durchgeführt werden:
- ein Schritt a, bei dem der Startbrenner (3), der dem Starten der Einheit dient, mit einem Gemisch aus einer Kohlenwasserstoffbeschickung und Luft beschickt wird, wobei das Gemisch verbrannt wird und die heißen Abflüsse, die aus dem Brenner kommen, mittels des Überträgers (6) einen gasförmigen Luftstrom erhitzen, der in einen Reformierungsreaktor (2) eintritt, daraus austritt und dann in den Überträger (7), dann in den Reinigungsabschnitt (5) eintritt, bis die Temperatur des Stroms, der aus dem Reformierungsreaktor kommt, einen Wert von mehr als 200 °C erreicht,
- ein Schritt b, der nach Schritt a beginnt, bei dem ein Wasserstrom durch indirekte Wärmeübertragung in dem Überträger (6) verdampft wird, der Überträger (7) dann mit mindestens einem der heißen Ströme des Verfahrens einen Wasserdampfstrom erzeugt, der in den Reformierungsreaktor eintritt, bis der Strom, der aus diesem Reaktor kommt, eine Temperatur von mehr als 300 °C erreicht und die Gesamtheit des Wassers verdampft ist, wobei der Wasserstrom so eingestellt wird, dass der Durchfluss im Bereich zwischen 15 % und 50 % des im Dauerbetrieb erforderlichen Durchflusses liegt,
- ein Schritt c, der nach Schritt b beginnt, bei dem die zu reformierende Kohlenwasserstoffbeschickung (10) durch indirekte Wärmeübertragung mit mindestens einem der heißen Ströme des Verfahrens in dem Überträger (7) verdampft wird, wobei die Beschickung anschließend in den Reformierungsreaktor (2) eingeführt wird, was die Produktion eines wasserstoffreichen Abflusses (30) ermöglicht, wobei dieser Schritt so lange durchgeführt wird, bis eine Temperatur des Abflusses (30) im Bereich zwischen 375 °C und 800 C erreicht wird, wobei der Strom der Kohlenwasserstoffbeschickung (10) so eingestellt wird, dass der Durchfluss im Bereich zwischen 20 % und 30 % des Durchflusses liegt, der im Dauerbetrieb erforderlich ist, und diese Betriebsbedingungen zwischen 5 und 15 Minuten lang beibehalten werden,
- ein Schritt d, der nach Schritt c beginnt, bei dem der Startbrenner (3) angehalten wird, an seiner Stelle ein Brenner, der im Dauerbetrieb läuft, (4) eingeschaltet wird, wobei der Brenner (4) mit dem Gemisch aus der Restluft und dem Restgas versorgt wird, das vom Reinigungsabschnitt (5) des wasserstoffreichen Flusses ausgestoßen wird,
wobei es weniger als 30 Sekunden Wartezeit zwischen dem Anhalten des Startbrenners (3) und dem Starten des Brenners, der in Dauerbetrieb läuft, (4) gibt, um das Abkühlen der gesamten Wasserstoffproduktionseinheit zu verhindern, und wobei während dieser Wartezeit in dem Startbrenner (3) eine Spülung mit Luft oder einem Inertgas durchgeführt wird,
bei dem ein Luftstrom (20) zum Auslass des Startbrenners (3) und des Brenners, der im Dauerbetrieb läuft, (4) geschickt wird, um die Temperatur der Abflüsse dieser Brenner zu steuern.

2. Verfahren zum Starten nach Anspruch 1, bei dem eine Inertisierung des Reformierungsreaktors (2) zwischen dem Schritt b und dem Schritt c mithilfe einer Spülung des Reformierungsreaktors mit einem Inertgas durchgeführt wird.

3. Verfahren zum Starten nach einem der Ansprüche 1 oder 2, bei dem mindestens eine Komponente der Wasserstoffproduktionseinheit, ausgewählt aus dem Reformierungsreaktor (2), dem Startbrenner (3), dem Brenner, der in Dauerbetrieb läuft, (4), dem Reinigungsabschnitt (5), vor dem Startvorgang gespült wird.

4. Verfahren zum Starten nach einem der Ansprüche 1 bis 3, bei dem die Kohlenwasserstoffbeschickung (8) in dem Überträger (7) durch indirekte Wärmeübertragung mit dem heißen Auslassfluss (30) des Reformierungsreformers (2) verdampft wird, bevor sie in den Reaktor eintritt.

5. Verfahren zum Starten nach einem der Ansprüche 1 bis 4, bei dem in dem Startbrenner (3) während des Wartezeitraums, der zwischen dem Anhalten des Startbrenners (3) und dem Einschalten des Brenners, der im Dauerbetrieb läuft, (4) in Schritt d liegt, eine Spülung mit Luft durchgeführt wird.

6. Verfahren zum Starten nach einem der Ansprüche 1 bis 5, bei dem der Übergang der Verbrennung des Startbrenners (3) auf den Brenner, der in Dauerbetrieb läuft, (4) im vierten Schritt (Schritt d) gemäß einer ersten Variante erfolgt, die darin besteht, den Startbrenner anzuhalten, die Luftströme oder sauerstoffreichen Gasströme, die der Verbrennung und der Verdünnung der heißen Abflüsse des Restgasbrenners dienen, zu übergeben, dann die Zündelektroden des Brenners, der in Dauerbetrieb läuft, (4) zu laden und schließlich die Abflüsse (33) aus dem Reinigungsabschnitt (5) in die Restgasbrenner (4) einlaufen zu lassen.

7. Verfahren zum Starten nach einem der Ansprüche 1 bis 5, bei dem der Übergang der Verbrennung des Startbrenners (3) auf den Brenner, der in Dauerbetrieb läuft, (4) im vierten Schritt (Schritt d) gemäß einer zweiten Variante erfolgt, die darin besteht, zunächst den Brenner, der in Dauerbetrieb läuft, (4) anzuschalten, indem er mit einem Luftstrom oder einem sauerstoffreichen Gasstrom versorgt wird, indem die Zündelektroden geladen werden und indem man die Gase einlaufen lässt, die aus dem Reinigungsabschnitt (5) austreten, dann den Startbrenner (3) schnell auszuschalten und die Spülung des Startbrenners (3) durchzuführen.

## Claims

1. Start-up process for a thermally integrated hydrogen production unit using a steam reforming process or an autothermal process of a liquid hydrocarbon feed, said unit comprising a start up burner (3), a burner used in permanent state (4), a reforming reactor (2), a purification section (5) and two heat exchangers (6) and (7), the start up process comprising the following stages:
- A stage a, wherein the start up burner (3) whose purpose is to ensure start-up of the unit is supplied with a mixture of hydrocarbon feedstock and air, whereby said mixture is burned, and the hot effluents that are obtained from said burner heat a gaseous stream by mean of the heat exchanger (6) that enters the reforming reactor (2) and that exits from , then enters into the heat exchanger (7), then into the purification zone (5) until the temperature of the gaseous stream that is obtained from said reforming reactor (2) reaches a value of more than 200°C,
- A stage b, initiated after stage a, wherein a stream of water is evaporated by indirect heat exchange in the heat exchanger (6), then in the exchanger (7), with at least one of the hot streams of the process, generating a stream of water vapor that enters said reforming reactor (2) until the stream that is obtained from this reactor reaches a temperature of more than 300°C and all of the water is evaporated, the stream of water being adjusted in such a way that the flow rate is in the range between 15% and 50% of the imposed flow rate in permanent state,
- A stage c, initiated after stage b, wherein the hydrocarbon feedstock that is to be reformed is evaporated by indirect heat exchange with at least one of the hot streams of the process inside the exchanger (7), said feedstock is then introduced into the reforming reactor (2) which makes possible the production of a hydrogen-rich effluent stream (30), this stage c) being maintained until the effluent stream (30) reaches a temperature ranging between 375°C and 800°C, said stream of hydrocarbon feed being regulated so that the flow rate is comprised between 20% and 30% of the flow rate corresponding to the permanent state, these conditions being maintained between 5 and 15 minutes,
- A stage d, initiated after stage c, wherein the start-up burner (3) is shut down, and, in its place, a burner (4) that is used in permanent state is lit, whereby said burner used in permanent state (4) is supplied by a mixture of residual air and gas discharged by the section for purification (5) of the hydrogen-rich stream,
- start up process wherein there are less than 30 seconds of waiting time between the shutdown of the start-up burner (3) and the start-up of the burner used in permanent state (4) so as to prevent the cooling of the entire hydrogen production unit, and this waiting period is used for carrying out a flushing of air or an inert gas in the start-up burner (3),
- start up process wherein an air stream (20) is sent at the exit of the start up burner (3) and of the burner used in permanent state (4) in order to control the temperature of the effluents of these burners (3) and (4).

2. Start-up process according to claim 1, wherein the reforming reactor (2) is inerted between stage b and stage c by purging the reforming reactor (2) with an inert gas.

3. Start-up process according to one of claims 1 or 2, wherein at least one component of the hydrogen production unit that is selected from among the reforming reactor(2), the start-up burner(3), the burner used in permanent state (4), and the purification section (5) is purged before the start-up process.

4. Start-up process according to one of claims 1 to 3, wherein the hydrocarbon feedstock (8) is evaporated by indirect heat exchange in the exchanger (7) with the hot stream (30) that exits the reforming reformer (2) before entering said reactor.

5. Start-up process according to one of claims 1 to 4, wherein a flushing with air is carried out in the start-up burner (3) during the waiting time between the shutdown of the start-up burner (3) and the lighting of the burner used in permanent state (4) in stage d.

6. Start-up process according to one of claims 1 to 5, wherein the transfer of the combustion of the start-up burner (3) to the burner used in permanent state (4) is carried out in the fourth stage (stage d) according to one solution consisting in shutting down the start-up burner (3), transferring the streams of air or oxygen-rich gas that are used in the combustion and the dilution of the hot effluents toward the burner used in permanent state (4), then entering the effluents (33) from the purification section (5) into the burner used in permanent state (4).

7. Start-up process according to one of claims 1 to 5, wherein the transfer of the combustion of the start-up burner (3) to the burner used in permanent state (4) is carried out in the fourth stage (stage d) according to a second solution consisting in lighting in a first time the burner used in permanent state (4) by feeding it with a stream of air or oxygen-rich gas, by arming the ignition electrodes and entering the gases that exit from the purification section (5), then by quickly extinguishing the start-up burner (3), and by purging said start-up burner (3).
